# EUROPÄISCHE PATENTSCHRIFT

(11) **EP 2 486 388 B1**
(45) Veröffentlichungstag und Bekanntmachung des Hinweises auf die Patenterteilung: **08.01.2014**
(21) Anmeldenummer: 10768430.0
(22) Anmeldetag: 05.10.2010
(51) Int. Cl.: G01N 21/05, G01N 21/31, G01N 21/64, G01N 21/78, B01F 13/00, B01L 3/00

(54) **MINIATURISIERTE ONLINE-SPURENANALYTIK**
MINIATURISED ONLINE TRACE ANALYSIS
ANALYSE DE TRACES MINIATURISÉE EN LIGNE

(30) Priorität: 06.10.2009 DE 102009048384
(43) Veröffentlichungstag der Anmeldung: 15.08.2012
(73) Patentinhaber: Hochschule Regensburg, 93049 Regensburg (DE)
(72) Erfinder: HUMMEL, Helmut, 84069 Schierling (DE); LECHNER, Alfred, 93138 Lappersdorf (DE)
(74) Vertreter: Klunker . Schmitt-Nilson . Hirsch
(86) Internationale Anmeldenummer: PCT/EP2010/064833
(87) Internationale Veröffentlichungsnummer: WO 2011/042439

(56) Entgegenhaltungen:
- EP-A2- 1 182 443
- WO-A1-99/57584
- US-A- 5 444 807
- AHMAD I ET AL: "Microfabrication and characterization of teflon af-coated liquid core waveguide channels in silicon" IEEE SENSORS JOURNAL, IEEE SERVICE CENTER, NEW YORK, NY, US, Bd. 3, Nr. 6, 1. Dezember 2003 (2003-12-01), Seiten 788-795, XP011104224 ISSN: 1530-437X DOI: DOI:10.1109/JSEN.2003.820343
- JIANG LINAN ET AL: "Integrated waveguide with a microfluidic channel in spiral geometry for spectroscopic applications" APPLIED PHYSICS LETTERS, AIP, AMERICAN INSTITUTE OF PHYSICS, MELVILLE, NY, US, Bd. 90, Nr. 11, 14. März 2007 (2007-03-14), Seiten 111108-111108, XP012093537 ISSN: 0003-6951 DOI: DOI:10.1063/1.2713356
- HOLGER SCHMIDT ET AL: "Optofluidic waveguides: I. Concepts and implementations" MICROFLUIDICS AND NANOFLUIDICS, SPRINGER, BERLIN, DE, Bd. 4, Nr. 1-2, 22. August 2007 (2007-08-22), Seiten 3-16, XP019547446 ISSN: 1613-4990
- AARON R HAWKINS ET AL: "Optofluidic waveguides: II. Fabrication and structures" MICROFLUIDICS AND NANOFLUIDICS, SPRINGER, BERLIN, DE, Bd. 4, Nr. 1-2, 19. Juli 2007 (2007-07-19), Seiten 17-32, XP019547444 ISSN: 1613-4990
- FOUCKHARDT ET AL: 'Micro flow modules with combined fluid flow channel and optical detection waveguide--hyper Rayleigh scattering as a case study.' FRESENIUS' JOURNAL OF ANALYTICAL CHEMISTRY Bd. 371, Nr. 2, 01 September 2001, Seiten 218 - 227, XP055014497 ISSN: 0937-0633
- AXEL GROSSE ET AL: "Deep wet etching of fused silica glass for hollow capillary optical leaky waveguides in microfluidic devices; Deep wet etching of fused silica glass for microfluidic devices", JOURNAL OF MICROMECHANICS & MICROENGINEERING, INSTITUTE OF PHYSICS PUBLISHING, BRISTOL, GB, vol. 11, no. 3, 1 May 2001 (2001-05-01), pages 257-262, XP020068644, ISSN: 0960-1317, DOI: 10.1088/0960-1317/11/3/315

## Beschreibung

Die Erfindung betrifft eine Vorrichtung und ein Verfahren zur spektroskopischen Messung von in Flüssigkeiten gelösten Substanzen.

In der Umweltanalytik, insbesondere in der Wasseranalytik, spielt der Nachweis und die Messung von in geringen Konzentrationen in Flüssigkeiten gelösten Stoffen eine große Rolle. Hierzu sind verschiedene spektroskopische Verfahren wie Absorption, Transmission, Fluoreszenz und Raman bekannt. Dazu werden Flüssigkeiten beispielsweise in Küvetten oder Zellen analysiert, die aus optisch transparentem, lichtleitendem Material, beispielsweise Quarzglas, bestehen. Um die Nachweisgrenze der nachzuweisenden Substanzen herabzusetzen ist es bekannt, möglichst lange Lichtwege innerhalb der Flüssigkeit, in der die nachzuweisende Substanz gelöst ist, zu realisieren. Dazu werden beispielsweise langgestreckte Küvetten, Kapillaren oder auch Flüssigkeitslichtwellenleiter eingesetzt, in welchen die Lichtverluste die entlang des langen Lichtwegs auftreten durch eine total reflektierende Innenoder Außenbeschichtung vermindert werden. Dabei muss der Brechungsindex der total reflektierenden Beschichtung kleiner sein als der Brechungsindex der Flüssigkeit, zumeist Wasser, in dem Flüssigkeitslichtwellenleiter. Wasser besitzt einen Brechungsindex von n = 1,33. Zur Ausbildung eines Flüssigkeitswellenleiters für wässrige Lösungen kommen daher Innenbeschichtungen aus amorphen, fluorierten Polymeren wie beispielsweise Teflon AF 1600 oder Teflon AF 2400 mit Brechungsindizes von 1,29 bzw. 1,31 oder auch anorganische Schichtmaterialien, wie nano-poröse Silica-Filme und Siliziumdioxide mit Brechungsindizes bis herab zu 1,18 oder Magnesiumfluorid-Magnesiumoxidhydroxid-Mischschichten mit Brechungsindizes bis herab zu 1,09 in Frage. Die genannten Brechungsindizes beziehen sich auf die Wellenlänge der Natrium-D-Linie.

Zur Realisierung der oben angesprochenen langen Lichtwege werden typischerweise Flüssigkeitslichtwellenleiter mit Längen im Bereich von mehreren Metern eingesetzt. Dies führt zu erheblichen Abmessungen der resultierenden Nachweisapparatur, was zur Folge hat, dass die beabsichtigten Nachweismessungen häufig nur im Labor durchgeführt werden können, wohingegen ein zeitnaher Nachweis solcher Spurenstoffe vor Ort beispielsweise direkt an einem zu untersuchenden Gewässer wünschenswert ist. Durch die Abmessungen bekannter Vorrichtungen wird ein solcher Vor-Ort-Einsatz jedoch verhindert oder zumindest erheblich erschwert.

I. AHMAD et al.: "Microfabrication and characterization of Teflon AF-coated liquid core waveguide channels in silicon", IEEE Sens. J., Bd. 3, Nr. 6, Seiten 788-795, beschreibt teflonbeschichtete Flüssigkeitswellenleiter auf Silizium.

L. Jiang und S. Pau: "Integrated waveguide with a microfluidic channel in spiral geometry for spectroscopic applications", Appl. Phys. Lett., Bd. 90, Nr. 11, Seiten 111108-1 bis 111108-3, beschreibt einen kompakten optischen Sensor mit einem integriertem Wellenleiter und einem spiralförmigen Mikrokanal.

Alternative Messmethoden, die keine langen Lichtwege erfordern, wie beispielsweise Atomabsorptionsspektroskopie (AAS), die Verwendung eines induktiv gekoppelten Plasma-Massenspektrometer (ICPMS) und Ionenchromatographie bedingen ebenfalls sehr große und kostenintensive Geräte.

Aufgabe der vorliegenden Erfindung ist es, eine miniaturisierte Messvorrichtung anzugeben, die dennoch einen langen Lichtweg innerhalb der zu untersuchenden Flüssigkeit schafft, ein Herstellungsverfahren für eine solche Messvorrichtung sowie ein entsprechendes Messverfahren.

Der Erfindung liegt die Erkenntnis zugrunde, dass ein Flüssigkeitslichtwellenleiter entgegen den bisher bekannten Ausgestaltungen, keinen kreisförmigen Querschnitt besitzen muss, wobei der Querschnitt die Fläche des mit Flüssigkeit zu befüllenden Hohlraums ist, die sich bei einem Schnitt senkrecht zur Längsrichtung des Flüssigkeitslichtwellenleiters ergibt. Mit anderen Worten findet eine Lichtleitung auch statt, wenn der Querschnitt des Flüssigkeitslichtwellenleiters von der bekannten Kreisform abweicht. Auf dieser Erkenntnis aufbauend ist die der vorliegenden Erfindung zu Grunde liegende Idee, den Flüssigkeitslichtwellenleiter nicht als selbsttragendes Element vorzusehen, sondern als geschlossenen Mikrokanal auf einem geeigneten Substrat. Ein selbsttragender Flüssigkeitslichtwellenleiter im Sinne der vorliegenden Schrift ist ein langgestreckter Hohlkörper, der im Innern zur Ausbildung eines Flüssigkeitslichtwellenleiters beschichtet ist und aus einem Material besteht, das mechanisch ausreichend stabil ist, so dass keine weiteren Element zur Stabilisation notwendig sind. Ein solcher selbsttragender Flüssigkeitslichtwellenleiter braucht nur an einzelnen, beabstandeten Punkten gehaltert werden.

Entsprechend bezieht sich die Erfindung auf eine Vorrichtung zur Ausbildung eines Flüssigkeitslichtwellenleiters, wie in Anspruch 1 definiert. Diese umfasst ein Substrat mit einem spiralförmigen Mikrokanal. Der Mikrokanal bildet nach entsprechender Auskleidung mit einer niedrig-brechenden Beschichtung, nach Vorsehen einer geeigneten Abdeckung und nach dem Befüllen mit Flüssigkeit den Flüssigkeitslichtwellenleiter. Durch das spiralförmige Ausbilden des Mikrokanals wird ein entsprechend gekrümmter Flüssigkeitslichtwellenleiter auf dem Substrat realisiert. Dadurch ist die Länge des Flüssigkeitslichtwellenleiters nicht durch die äußeren Abmessungen des Substrats beschränkt, wie dies bei geradlinigen Mikrokanälen der Fall ist. Vielmehr kann der Mikrokanal beispielsweise mit einer Vielzahl von Schleifen oder Windungen auf der Substratoberfläche vorgesehen sein, so dass auch bei kleinen Abmessungen des Substrats ein langer Mikrokanal und somit ein entsprechend langer Flüssigkeitslichtwellenleiter realisiert werden kann.

Der Mikrokanal ist spiralförmig ausgebildet, wobei der Mittelpunkt der Spirale mit dem Mittelpunkt der Kreisscheibe zumindest im Wesentlichen zusammenfällt. Besonders bevorzugt handelt es sich dabei um eine Archimedes-Spirale, bei der der Radius des Spiralarmes, das heißt des Mikrokanals, proportional zu dem Azimuthalwinkel ist. Im Sinne der vorliegenden Schrift wird mit dem Ausdruck "spiralförmig" eine Form verstanden, die zumindest einen vollständigen Umlauf um einen Mittelpunkt aufweist und dessen Radius um diesen Mittelpunkt sich monoton, vorzugsweise proportional zum Azimuthalwinkel, verändert. Die bevorzugte spiralförmige Ausbildung des Mikrokanals hat den Vorteil, dass auf der Substratoberfläche eine Vielzahl eng benachbarter Windungen vorgesehen werden können. Bevorzugt haben benachbarte Windungen voneinander einen Abstand, zwischen 800 und 1500 µm, vorzugsweise 800, 900, 1000, 1200 oder 1500 µm. Somit kann ein großer Flächenanteil der Substratoberfläche für die Ausbildung des Mikrokanals vorgesehen werden, wodurch eine große Länge des Mikrokanals und ein entsprechend langer Lichtweg in dem zu schaffenden Flüssigkeitslichtwellenleiter realisiert werden kann. Zudem ändert sich die Krümmung des Mikrokanals, das heißt die Änderung der Längsrichtung entlang der Längsrichtung, kontinuierlich und monoton, vorzugsweise linear, wodurch der Krümmungsradius an jeder Stelle des Mikrokanals maximiert wird, kleine Krümmungsradien vermieden werden und somit der Strömungswiderstand für die Flüssigkeit innerhalb des auszubildenden Flüssigkeitslichtwellenleiters minimiert wird. Der monotone Verlauf der Krümmung des Mikrokanals und des entsprechenden Flüssigkeitslichtwellenleiters hat weiterhin den entscheidenden Vorteil, dass bei der Lichtleitung nur eine minimale Anzahl von Verlustmoden auftritt und somit die Lichtleitfähigkeit des auszubildenden Flüssigkeitslichtwellenleiters maximiert wird. Vorzugsweise beträgt der minimale Krümmungsradius des gegebenenfalls spiralförmigen Mikrokanals 20 mm, 10 mm oder 5 mm.

Der Mikrokanal hat vorzugsweise eine Tiefe im Bereich zwischen 50 und 500 µm, insbesondere 200, 250, 300, 400 oder 500 µm, wobei jeder der genannten Einzelwerte eine Bereichsgrenze des angegebenen Wertebereichs darstellen kann. Bei solchen Abmessungen des Mikrokanals kann in dem späteren Flüssigkeitslichtwellenleiter eine laminare Flüssigkeitsströmung in guter Näherung realisiert werden, das heißt, dass für die spektroskopische Untersuchung störende Turbulenzen in der Flüssigkeit vermieden werden. Weiterhin weist der Mikrokanal auch bei einer großen Kanallänge wegen des geringen Kanalquerschnitts ein insgesamt geringes Gesamtvolumen auf, wodurch die Mindestmenge einer zu untersuchenden Probenflüssigkeit klein ist. Die Kanallängen betragen vorzugsweise mehr als 1, 2, 3, 5, 10, 15, 20, 25 oder 30 Meter.

Die niedrig-brechende Beschichtung der erfindungsgemäßen Vorrichtung zur Ausbildung eines Flüssigkeitslichtwellenleiters besitzt eine Dicke von 2 bis 10 µm, insbesondere 2,3,4,5 oder 10 µm, wobei die genannten Einzelwerte Bereichsgrenzen des genannten Wertebereichs darstellen können. Vorzugsweise besteht die Beschichtung aus Teflon, nanoporösem Siliziumdioxid oder einer nanoporösen Doppelverbindung aus Magnesiumfluorid-Magnesiumoxidhydroxid.

In der erfindungsgemäßen Vorrichtung zur Ausbildung eines Flüssigkeitslichtwellenleiters ist in dem Substrat eine Zuleitung ausgebildet, die ein Zuund Abführen von Flüssigkeit in den geschlossenen Mikrokanal hinein und aus dem geschlossenen Mikrokanal heraus gestattet. Vorzugsweise ist an beiden Enden des Mikrokanals jeweils eine Zuleitung ausgebildet, von denen eine die Flüssigkeit dem geschlossenen Mikrokanal zuführt und die andere die Flüssigkeit aus dem geschlossenen Mikrokanal abführt. Damit kann die Flüssigkeit in dem Flüssigkeitslichtwellenleiter leicht ausgetauscht werden und insbesondere kann auch während der spektroskopischen Messung ein kontinuierlicher Flüssigkeitsstrom vorgesehen sein, indem beispielsweise während der spektroskopischen Messung die Flüssigkeit durch den Mikrokanal gepumpt wird, was durch eine Flüssigkeitspumpe realisiert werden kann, die während der spektroskopischen Messung in Betrieb ist. Dabei ist es von Vorteil, wenn innerhalb des Flüssigkeitslichtwellenleiters eine laminare Strömung vorliegt und für die spektroskopische Untersuchung störende Turbulenzen in der Flüssigkeit vermieden werden. Dies wird erfindungsgemäß dadurch erreicht, dass die Zuleitungen bezogen auf die Längsrichtungen des Mikrokanals nicht-axial verlaufen und vorzugsweise mit der Längsrichtung des Mikrokanals am Kreuzungspunkt zwischen Zuleitung und Mikrokanal einen Winkel zwischen 10 und 90 Grad bilden, vorzugsweise 10, 15, 20, 30, 45, 60 oder 90 Grad. Die genannten Einzelwerte können Bereichsgrenzen des genannten Wertebereichs sein.

Weiterhin ist auf dem Substrat an zumindest einem Ende des geschlossenen Mikrokanals, vorzugsweise an beiden Enden des geschlossenen Mikrokanals, eine Vorrichtung zum axialen Ein- und/oder Auskoppeln von Licht in den geschlossenen Mikrokanal bzw. aus dem geschlossenen Mikrokanal heraus vorgesehen.

Vorzugsweise ist die Vorrichtung zum axialen Ein- und Auskoppeln als Aufnahme für einen Lichtwellenleiter ausgebildet, wobei die Aufnahme eine axiale, geradlinige Fortführung des Mikrokanals in dem Substrat bildet. Durch den halbkreisförmigen Querschnitt des Mikrokanals kann ein solcher Lichtwellenleiter, insbesondere ein Ein-Moden-Lichtwellenleiter, geeignet in dem Mikrokanal positioniert werden, insbesondere wenn der Durchmesser des Lichtwellenleiters gleich der Tiefe des Mikrokanals ist. Besonders bevorzugt ist in dem Mikrokanal zwischen dem als Flüssigkeitslichtwellenleiter vorgesehenen, geschlossenen Mikrokanal und dem Lichtwellenleiter ein Element vorgesehen, das ein effektives Ein- und/oder Auskoppeln von Licht gewährleistet. Bevorzugt ist diese Mikrolinse, insbesondere eine GRIN-Linse (Gradient Index).

Alternativ kann die Vorrichtung zum axialen Ein- und/oder Auskoppeln von Licht in den geschlossenen Mikrokanal als Umlenkeinheit ausgestaltet sein, die Licht aus Richtung der Abdeckplatte axial in den geschlossenen Mikrokanal und/oder Licht aus dem geschlossenen Mikrokanal in Richtung der Abdeckplatte umlenkt. Dies gestattet ein Ein- und/oder Auskoppeln von Licht in den geschlossenen Mikrokanal auch ohne Lichtwellenleiter. Dabei weist die Abdeckplatte geeignete Aussparungen auf oder ist lichtdurchlässig, was beispielsweise durch eine Abdeckplatte aus Quarzglas erreicht werden kann. Die Umlenkeinheit kann beispielsweise ein in dem Substrat angeordneter Mikrospiegel sein.

Eine lichtdurchlässige, transparente Abdeckplatte, beispielsweise aus Quarzglas, hat den Vorteil, dass dadurch der geschlossene Mikrokanal auch transversal durchstrahlt werden kann. Dies ist beispielsweise für Fluoreszenzund Ramanmessungen vorteilhaft, wie weiter unten näher erläutert.

In einer bevorzugten Ausgestaltung der Vorrichtung zur Ausbildung eines Flüssigkeitslichtwellenleiters ist auf der zumindest einen FlüssigkeitsZuleitung des Substrats ein Mikromischer und/oder eine Mikropumpe ausgebildet. Dadurch kann die Vorrichtung und auch die resultierende MessVorrichtung zum einen weiter miniaturisiert werden. Zum anderen gestattet das Vorsehen eines Mikromischers die Zuleitung von zwei verschiedenen Flüssigkeiten, wodurch der Freiheitsgrad bei der Ausgestaltung des Messverfahrens steigt.

Die erfindungsgemäße Messvorrichtung umfasst zusätzlich zu der beschriebenen Vorrichtung zur Ausbildung eines Flüssigkeitslichtwellenleiters eine Lichtquelle, einen Lichtdetektor sowie eine erste Flüssigkeitspumpe, die dem geschlossenen Mikrokanal über die zumindest eine Zuleitung eine Probenflüssigkeit zuführt. Der mit der Probenflüssigkeit gefüllte, geschlossene Mikrokanal bildet einen Flüssigkeitslichtwellenleiter. In der Probenflüssigkeit liegt die spektroskopisch nachzuweisende Substanz in gelöster Form vor. Die Probenflüssigkeit ist vorzugsweise eine wässrige Lösung, das heißt der Brechungsindex der Probenflüssigkeit entspricht im Wesentlichen dem Brechungsindex von Wasser. Die Lichtquelle ist dabei eingerichtet, den geschlossenen Mikrokanal mit Licht zu durchstrahlen.

In einer ersten Ausgestaltung der erfindungsgemäßen Messvorrichtung ist diese zur Durchführung von Transmissions- bzw. Absorptionsmessungen eingerichtet. Dazu wird das Licht der Lichtquelle axial in den geschlossenen Mikrokanal bzw. den Flüssigkeitslichtwellenleiter eingekoppelt. Dies kann über einen Lichtwellenleiter geschehen. In diesem Fall kann die Abdeckplatte lichtundurchlässig sein und beispielsweise ebenfalls ein Silizium-Wafer sein. Alternativ kann die axiale Einkopplung des Lichtes der Lichtquelle auch durch die oben beschriebene Umlenkeinheit verwirklicht werden, wobei in diesem Fall die Abdeckplatte geeignete Aussparungen aufweist und/oder lichtdurchlässig ist. In an sich analoger Weise wird das transmittierte Licht am anderen Ende des Mikrokanals dem Lichtdetektor zugeführt, wobei dies wiederum mit Hilfe eines Lichtwellenleiters oder einer geeigneten Umlenkeinheit geschehen kann.

Je nach dem gewählten Messverfahren ist das Licht der Lichtquelle monochromatisch oder breitbandig und liegt im UV- und/oder sichtbaren (VIS) Wellenlängenbereich. Ebenso kann das transmittierte Licht vollständig dem Lichtdetektor zugeleitet werden, oder es kann spektral gefiltert oder aufgespalten werden, beispielsweise über Wellenlängenfilter oder eine spektrometrische Einheit. Bei breitbandiger Einstrahlung von Licht und anschließender spektraler Aufspaltung des transmittierten Lichts kann dieses verschiedenen Lichtdetektoren zugeführt werden, wodurch zeitgleich mehrere Messungen bei verschiedenen Wellenlängen parallel durchgeführt werden können und somit verschiedene gelöste Stoffe zeitgleich gemessen werden können.

In einer besonders bevorzugten Ausgestaltung gibt die Lichtquelle monochromatisches Licht im sichtbaren Wellenlängenbereich ab und der Lichtdetektor detektiert das gesamte transmittierte Licht ohne vorherige spektrale Filterung. In einer weiterhin bevorzugten Ausgestaltung geschieht die Einund Auskopplung über die oben genannten Umlenkeinheiten, wodurch die Lichtquelle und der Lichtdetektor direkt auf dem Substrat oder der Abdeckplatte der Vorrichtung zur Ausbildung eines Flüssigkeitslichtwellenleiters angeordnet werden können. Für eine solche Ausgestaltung eignen sich besonders LED-Dioden oder Halbleiter-Laser-Dioden als Lichtquelle und Photodioden beispielsweise Avalanche-Photodioden als Lichtdetektor, welche als Bauteile mit geringen äußeren Abmessungen zur Verfügung stehen. Dadurch wird die erfindungsgemäße Messvorrichtung weiter miniaturisiert. Eine Avalanche-Photodioden, auch Lawinen-Photodioden genannt, sind hochempfindliche und schnelle Photodioden, die den Lawinen-Durchbruch (Avalanche-Effekt) nutzen, der auch in Zener-Dioden verwendet wird.

In einer weiteren bevorzugten Ausführung ist die Abdeckplatte der Vorrichtung zur Ausbildung eines Flüssigkeitslichtwellenleiters lichtdurchlässig und vorzugsweise aus Quarzglas gebildet und besonders bevorzugt mit einer für das eingestrahlt Licht, beispielsweise für UV-Licht, anti-reflektierenden Beschichtung versehen. Somit kann Licht der Lichtquelle, die vorzugsweise eine Anregungslichtquelle ist, transversal, das heißt senkrecht zur Längsrichtung des Mikrokanals, durch die Abdeckplatte hindurch eingestrahlt werden, wobei durch die Total- bzw. Fresnell-Reflexion an den beschichteten Kanalwänden Licht mit hoher Ausbeute in den Flüssigkeitslichtwellenleiter eingekoppelt wird. Diese Anordnung eignet sich für Fluoreszenz- und Ramanmessungen, wobei das in der Probenflüssigkeit erzeugte Fluoreszenzlicht durch den Flüssigkeitslichtwellenleiter gesammelt wird und zu den Enden des Flüssigkeitslichtwellenleiters geleitet wird. In dieser Ausgestaltung wird vorzugsweise UV-Licht eingestrahlt und das Fluoreszenzlicht axial ausgekoppelt und nach gegebenenfalls spektraler Filterung dem Lichtdetektor zugeführt. Dabei kann auf eine spektrale Filterung des Anregungslichts und somit auf ein entsprechendes Filterelement verzichtet werden, da das transversal eingestrahlte Anregungslicht einen großen Auftreffwinkel auf die Beschichtung des Mikrokanals aufweist, so dass keine Totalreflexion stattfindet. Entsprechend wird das Anregungslicht auch nicht durch den Flüssigkeitslichtwellenleiter zum Lichtdetektor geleitet.

Mit der erfindungsgemäßen Messvorrichtung und dem erfindungsgemäßen Messverfahren können bei Transmissions- und Absorptionsmessungen verschiedenste Substanzen anhand charakteristischer Absorptionsbanden nachgewiesen werden. Je nach nachzuweisender Substanz wird das Licht der Lichtquelle sowie eine eventuelle spektrale Filterung des eingestrahlten Lichts ausgewählt. Beispielsweise können organische Lösungsmittel wie Aceton, Benzopyren, Benzol oder Anionen wie Nitrat oder Phosphat nachgewiesen werden, die charakteristische Absorptionsbanden im nahen UV-Bereich aufweisen. Ebenso können organische Stoffe mit konjugiertem π-System nachgewiesen werden, die typischerweise Absorptionsbanden im sichtbaren Wellenlängenbereich aufweisen. Ebenso weist Ni²⁺ eine charakteristische Absorptionsbande bei 670 nm auf.

In der erfindungsgemäßen Messvorrichtung ist die Flüssigkeitspumpe, die die Probenflüssigkeit dem geschlossenen Mikrokanal zuführt, vorzugsweise auf dem Substrat der Vorrichtung zur Ausbildung eines Flüssigkeitslichtwellenleiters als Mikropumpe integriert. Dadurch kann die erfindungsgemäße Messvorrichtung weiter miniaturisiert werden.

In einer weiteren bevorzugten Ausgestaltung der Messvorrichtung ist diese ausgebildet, dem geschlossenen Mikrokanal neben der Pumpenflüssigkeit auch eine zweite Nachweisflüssigkeit zuzuführen. Diese beiden Flüssigkeiten werden vor dem Einleiten in den geschlossenen Mikrokanal gemischt, was vorzugsweise über einen Mikromischer geschieht, der in dem Substrat der Vorrichtung zur Ausbildung eines Flüssigkeitslichtwellenleiters integriert ist. Die Nachweisflüssigkeit wird über eine weitere Flüssigkeitspumpe dem Mikromischer zugeführt, wobei das Mischungsverhältnis von Probenflüssigkeit und Nachweisflüssigkeit über die beiden Flüssigkeitspumpen eingestellt werden kann. Bevorzugt sind beide Flüssigkeitspumpen als Mikropumpen auf dem Substrat der Vorrichtung zur Ausbildung eines Flüssigkeitslichtwellenleiters integriert, was die erfindungsgemäße Messvorrichtung weiter miniaturisiert.

In einer besonders bevorzugten Ausgestaltung des erfindungsgemäßen Messverfahrens werden Metallionen nachgewiesen. Eine direkte Beobachtung solcher Metallionen mittels Absorptionsmessung ist im Allgemeinen nicht möglich, da Metallionen typischerweise Absorptionsbanden im tiefen UV-Bereich aufweisen. In einer bevorzugten Ausgestaltung des erfindungsgemäßen Messverfahrens lösen diese Metallionen eine Nachweisreaktion aus, wobei das Produkt der Nachweisreaktion über eine Absorptionsmessung nachgewiesen werden kann. Dazu wird dem geschlossenen Mikrokanal neben der Probenflüssigkeit, die die nachzuweisenden Metallionen enthält, auch eine Nachweisflüssigkeit zugeführt, in der ein geeigneter Komplexbildner gelöst ist. Bei Mischung der Proben und der Nachweisflüssigkeit im Mikromischer, gehen die Metallionen Koordinationsverbindungen mit dem Komplexbildner ein, wobei die resultierenden Metallkomplexe erlaubte Charge-Transfer-Übergänge mit großen Extinktionskoeffizienten ε aufweisen, die eine starke Absorption im sichtbaren Wellenlängenbereich besitzen. In diesem Fall kann der Nachweis von Metallionen in vorteilhafter Weise über die Absorption von monochromatischem, sichtbaren Licht geschehen. Eine weitere spektrale Filterung vor dem Lichtdetektor ist dabei vorteilhafterweise nicht notwendig.

In einer ersten bevorzugten Ausgestaltung des Messverfahrens werden Cu²⁺-Ionen nachgewiesen und als Komplexbildner 1,10-Phenanthrolin (C₁₂H₈N₂) verwendet. Der resultierende Metallkomplex besitzt eine Absorption bei 650 nm. In einer weiteren bevorzugten Ausgestaltung werden Fe²⁺-Ionen nachgewiesen, welche mit 1,10-Phenanthrolin als Komplexbildner ein Metallkomplex bilden, der eine Absorption bei 510 nm besitzt. Ebenso können Fe²⁺-Ionen mit 3-(2-Pyridyl)-5,6-bis(4-phenyl-sulfonsäure)-1,2,4-triazine-5',5"-Dinatriumsalz (C₁₆H₈N₄Na₂O₈S₂) als Komplexbildner nachgewiesen werden, wobei der resultierende Komplex eine Absorption bei 567 nm zeigt.

Ein Mikrokanal kann prinzipiell mit verschiedenen Verfahren in einem Substrat vorgesehen sein, beispielsweise durch Verprägen von Polymeren, wie Polycarbonat, oder Fräsen. Erfindungsgemäß wird der Mikrokanal in das Substrat durch isotropes Ätzen, vorzugsweise nasschemisches Ätzen, eingebracht. Dazu wird in einem ersten Schritt ein geeignetes Substrat bereitgestellt. Da die Lichtleitung innerhalb des zu schaffenden Flüssigkeitslichtwellenleiters überwiegend von der noch aufzubringenden Beschichtung abhängt und somit das Substrat eine untergeordnete Rolle für die Lichtleitung spielt, kommen prinzipiell eine Vielzahl von Substraten für die erfindungsgemäße Vorrichtung in Frage. In dem Flüssigkeitslichtwellenleiter treten jedoch beim Befüllen mit der zu untersuchenden Flüssigkeit und gegebenenfalls auch während der Messung hohe Drücke auf, die in der Größenordnung von mehreren bar liegen können. Daher wird bevorzugt ein Substrat bereitgestellt, das eine entsprechend ausreichende mechanische Stabilität besitzt. Als Materialien für das Substrat kommen daher insbesondere Quarzglas, Borosilikat-Gläser wie Pyrex-Glas, Natron-Kalk-Glas, verschiedene Polycarbonate und besonders bevorzugt Silizium, beispielsweise ein Silizium-Wafer, in Frage.

In einem weiteren Schritt wird auf beispielsweise lithographischem Wege eine Ätzmaske auf die Substratoberfläche aufgebracht, die den auszubildenden Mikrokanal definiert. Dabei ist das Material der Ätzmaske auf das Ätzmedium und das Substrat abgestimmt. Zum Ätzen eines Silizium-Substrats in einem sauren Milieu eignet sich beispielsweise Nitrid als Material für die Ätzmaske

In einem weiteren Schritt wirkt das Ätzmedium auf das Substrat an den durch die Ätzmaske vorgegebenen Stellen ein. Das Ätzmedium ist gasförmig oder flüssig und strömt während des Ätzschritts mit einer gleichmäßigen Störungsgeschwindigkeit auf der zu ätzenden Oberfläche des Substrats. Mit anderen Worten bleibt die Strömungsgeschwindigkeit während des Ätzschritts an jeder Stelle der Oberfläche des Substrats zeitlich konstant, wobei an verschiedenen Stellen des Substrats unterschiedliche Strömungsgeschwindigkeiten auftreten können. Dadurch wird eine hohe Reproduzierbarkeit des geätzten Mikrokanals erreicht. Das Herstellen des Mikrokanals mittels Ätzen hat im Vergleich zu gefrästen oder geprägten Mikrokanälen den Vorteil, dass dadurch in dem Mikrokanal Oberflächen hoher Güte, das heißt glatte Oberflächen mit geringer Oberflächenrauhigkeit, geschaffen werden, wodurch die Lichtleitung in dem zu schaffenden Flüssigkeitslichtwellenleiter verbessert wird.

Die Ätzung in dem Substrat ist isotrop, das heißt die Ätzgeschwindigkeit ist in allen Raumrichtungen im Wesentlichen gleich und beispielsweise von den Kristallebenen in einem Silizium-Wafer unabhängig. Dadurch kann wegen der gleichmäßigen Strömungsgeschwindigkeit des Ätzmediums vorteilhafterweise ein Mikrokanal mit einem im Wesentlichen halbkreisförmigen Querschnitt geschaffen werden, dessen Tiefe gleich oder nur geringfügig kleiner als die Hälfte dessen Breite ist. Dabei ist die Tiefe des Mikrokanals der Abstand zwischen der Ebene der Substratoberfläche und der tiefsten Stelle des Mikrokanals an einer Schnittlinie, die senkrecht zu der Längsrichtung des Mikrokanals verläuft. Die Tiefe wird entlang der Flächennormalen der Substratoberfläche gemessen. Die Breite des Mikrokanals ist der Abstand der Schnittpunkte der Innenwände des Mikrokanals mit der Substratoberfläche entlang einer Schnittlinie, die senkrecht zu der Längsrichtung des Mikrokanals verläuft. Die Breite wird in der Ebene der Substratoberfläche gemessen. Das Verhältnis zwischen Breite und Tiefe des geätzten Mikrokanals, das heißt das Aspektverhältnis des Mikrokanals kann durch die Strömungsgeschwindigkeit des Ätzmediums gezielt beeinflusst werden. Ein solcher halbkreisförmiger Mikrokanal ist zum einen vorteilhaft für die Lichtleitung in dem späteren Flüssigkeitslichtwellenleiter und gestattet zum anderen die Realisierung einer einfachen axialen Ein- und Auskopplung von Licht mittels eines Lichtwellenleiters. Der Mikrokanal hat vorzugsweise eine Tiefe im Bereich zwischen 50 und 500 µm, insbesondere 200, 250, 300, 400 oder 500 µm, wobei jeder der genannten Einzelwerte eine Bereichsgrenze des angegebenen Wertebereichs darstellen kann. Bei solchen Abmessungen des Mikrokanals kann in dem späteren Flüssigkeitslichtwellenleiter eine laminare Flüssigkeitsströmung in guter Näherung realisiert werden, das heißt, dass für die spektroskopische Untersuchung störende Turbulenzen in der Flüssigkeit vermieden werden. Weiterhin weist der Mikrokanal auch bei einer großen Kanallänge wegen des geringen Kanalquerschnitts ein insgesamt geringes Gesamtvolumen auf, wodurch die Mindestmenge einer zu untersuchenden Probenflüssigkeit klein ist. Die Kanallängen betragen vorzugsweise mehr als 1, 2, 3, 5,10,15, 20, 25 oder 30 Meter.

Bevorzugt strömt das Ätzmedium im Wesentlichen in Richtung des zu ätzenden Mikrokanals. Dadurch kann ein Mikrokanal mit halbkreisförmigem Querschnitt geschaffen werden, das heißt ein Mikrokanal dessen Breite und Tiefe im Wesentlichen identisch ist.

Wird als Substrat ein Siliziumeinkristall, beispielsweise ein Silizium-Wafer, verwendet, so kann dieser prinzipiell mit einem sauren wie auch mit einem alkalischen Medium geätzt werden. Bei der Ätzung in einem alkalischen Milieu spielt jedoch die Kristallstruktur eine große Rolle und die Ätzform ist durch ausgezeichnete Kristallflächen ({111}-Ätzstopflächen) definiert. Somit ist mit einer Ätzung in einem alkalischen Milieu ein isotropes Ätzen nicht möglich, ebenso wie ein abschnittsweise gekrümmter Verlauf des Mikrokanals. In einem sauren Milieu ist die Ätzung dagegen weitgehend unabhängig von der Kristallstruktur. Somit kann eine isotrope Ätzung realisiert werden, die das Ausbilden eines zumindest im Wesentlichen halbkreisförmigen Mikrokanals gestattet, und auch der Verlauf des zumindest abschnittsweise gekrümmten Mikrokanals auf der Substratoberfläche kann beliebig, insbesondere unabhängig von der Kristallstruktur des Siliziumkristalls, gewählt werden.

In einer bevorzugten Ausgestaltung des Herstellungsverfahrens ist das zu ätzende Substrat kreisscheibenförmig ausgebildet, wie dies beispielsweise bei einem Silizium-Wafer der Fall ist. Wird während des Ätzschritts mittig, oberhalb der zu ätzenden Oberfläche des Substrats ein beiseitig konisch zulaufender Rührfisch oder eine diskusförmige Rührscheibe positioniert und rotiert, so kann dadurch auf einfache Art und Weise eine laminare, gleichmäßige und homogene Strömung des Ätzmediums auf der Oberfläche des zu ätzenden Substrats realisiert werden. Die Strömungsgeschwindigkeit ist vorzugsweise radial homogen, das heißt in zumindest einem gegebenen radialen Bereich auf der Substratoberfläche strömt das Ätzmedium in azimuthaler Richtung, so das die Stömungsgeschwindigkeit des Ätzmediums bei verschiedenen Radien identisch ist. Mit anderen Worten verhält sich die Rotationsgeschwindigkeit des Ätzmediums in dem gegebenen radialen Bereich indirekt proportional zum jeweiligen Radius. In diesem Zusammenhang bedeutet mittig, dass die Rotations- und Symmetrieachse des Rührfisches bzw. der Rührscheibe eine Flächennormale des kreischeibenförmigen Substrats ist und durch den Mittelpunkt des kreischeibenförmigen Substrats verläuft. Weiterhin verläuft der zu ätzende Mikrokanal auf einem solchen kreisscheibenförmigen Substrat vorzugsweise im Wesentlichen in azimuthaler Richtung bezüglich des Mittelpunkts des kreisscheibenförmigen Substrats. Dadurch wird mit der oben beschriebenen Rühranordnung während des Ätzschrittes eine laminare, gleichmäßige und radial homogene Strömung des Ätzmediums erzeugt, die im Wesentlichen in Richtung des zu ätzenden Mikrokanals geht. Der zu ätzende Mikrokanal ist spiralförmig ausgebildet, wobei der Mittelpunkt der Spirale mit dem Mittelpunkt der Kreisscheibe zumindest im Wesentlichen zusammenfällt. Besonders bevorzugt handelt es sich dabei um eine Archimedes-Spirale, bei der der Radius des Spiralarmes, das heißt des Mikrokanals, proportional zu dem Azimuthalwinkel ist.

In einer bevorzugten Ausgestaltung des Herstellungsverfahrens für den Mikrokanal geschieht das Einwirken des Ätzmediums in mehreren Schritten. Dazwischen wird das Ätzen unterbrochen und das Substrat mit der aufgebrachten Ätzmaske mit einer geeigneten Substanz gespült, beispielsweise mit Wasser. Ein solches schrittweises Ätzen hat den Vorteil, dass die Ätzmaske eine höhere Beständigkeit während des Ätzens aufweist und somit ein Mikrokanal hoher Güte und Tiefe geschaffen werden kann. Vorzugsweise wird für jeden Ätzschritt ein frisches, vollständig unverbrauchtes, gegebenenfalls neu angesetztes Ätzmedium verwendet.

Nach dem Ätzen wird die Ätzmaske entfernt. Vor dem Schließen des Mikrokanals kann die Innenwand des Mikrokanals noch geglättet werden indem sie mit Hilfe von gasförmiger Flusssäure und gasförmigem Ozon poliert wird.

Anschließend wird der geätzte und gegebenenfalls polierte Mikrokanal geschlossen. Dazu wird in einer ersten bevorzugten Ausgestaltung des Verfahrens der geätzte Mikrokanal mit einer planaren Abdeckplatte abgedeckt. Anschließend wird die Abdeckplatte auf dem Substrat befestigt und dadurch der geätzte Mikrokanal geschlossen und somit ein geschlossener Mikrokanal ausgebildet. Die Materialien von Substrat und Abdeckplatte können identisch oder auch verschieden sein. Beispielsweise kann eine planare Abdeckplatte aus Quarzglas auf einem Substrat aus Silizium, beispielsweise auf einem Silizium-Wafer durch anodisches Bonden befestigt werden. Alternativ kann die Abdeckplatte auch selbst aus Silizium bestehen und beispielsweise ein weiterer Silizium-Wafer sein, der mittels Silizium-Silizium-Direktbonden (SDB) auf dem geätzten Silizium-Wafer befestigt wird. Auch andere Materialien und Materialkombinationen können durch Bonden oder andere Bonding-Prozesse mechanisch verbunden werden. Alternativ sind alle Befestigungsmethoden geeignet, die eine ausreichend mechanisch stabile Verbindung zwischen Substrat und Abdeckplatte schaffen und dabei eine ausreichende Flüssigkeits- und Lichtdichtheit des geschlossenen Mikrokanals schaffen. Beim anodischen Bonden werden Substrat und Abdeckplatte auf hohe Temperatur gebracht, beispielsweise 500°C, und es wird eine Hochspannung, beispielsweise 1 kV zwischen Substrat und Abdeckplatte angelegt.

In einem weiteren Schritt wird der geschlossene Kanal mit einer niedrig-brechenden Beschichtung versehen. Vorzugsweise besteht die Beschichtung aus Teflon, nanoporösem Siliziumdioxid oder einer nanoporösen Doppelverbindung aus Magnesiumfluorid-Magnesiumoxidhydroxid. Das Beschichtungsmaterial wird in einem geeigneten Lösungsmittel, beispielsweise FC40, FC75 oder FC77, gelöst und die Lösung in den geschlossenen Mikrokanal eingespritzt. Dazu wird beispielsweise eine geeignet geformte Kanüle in den geschlossenen Mikrokanal eingeführt, die die Lösung mit dem aufzubringenden Beschichtungsmaterial in dem geschlossenen Mikrokanal geeignet verteilt. Anschließend wird der geschlossene Mikrokanal mit gasförmigem Stickstoff gespült.

Dadurch wird ein geschlossener, beschichteter Mikrokanal geschaffen, der innen hohl ist und bei Befüllung mit einer geeigneten Flüssigkeit, die einen höheren Brechungsindex als die niedrig-brechende Beschichtung aufweist, beispielsweise Wasser, ein Flüssigkeitslichtwellenleiter ausgebildet. Der geschlossene Mikrokanal ist vollständig mit der niedrig-brechenden Beschichtung ausgekleidet.

In einer alternativen Ausgestaltung des Verfahrens zur Schaffung eines geschlossenen, beschichteten Mikrokanals, wird vor dem Zusammenfügen von Substrat und Abdeckplatte die Substratoberfläche mit dem geätzten Mikrokanal und die Oberfläche der planaren Abdeckplatte mit einer niedrig-brechenden Beschichtung versehen. Vorzugsweise besteht die Beschichtung aus Teflon, nanoporösem Siliziumdioxid oder einer nanoporösen Doppelverbindung aus Magnesiumfluorid-Magnesiumoxidhydroxid. Dazu wird eine Lösung mit dem aufzubringenden Beschichtungsmaterial, beispielsweise durch Spin-Coating oder Sprüh-Coating, auf die Substratoberfläche mit dem geätzten Mikrokanal und die Oberfläche der planaren Abdeckplatte aufgebracht. Spin-Coating, auch Rotationsbeschichtung genannt, ist ein Verfahren zum Auftragen dünner und gleichmäßiger Schichten bzw. Filme auf einem Substrat. Es eignet sich zum Aufbringen von prinzipiell allen in Lösung vorliegenden Materialien. Das Substrat, beispielsweise ein Silizium-Wafer, wird auf einem Drehteller fixiert und mit einer bestimmten Drehzahl und für eine bestimmte Zeit gedreht. Mit einer Dosiereinrichtung über dem Zentrum des rotierenden Substrats wird eine gewünschte Menge der Lösung aufgebracht, wobei die Lösung gleichmäßig über die Substratoberfläche verteilt und überschüssige Lösung abgeschleudert wird. Bevorzugt wird die Lösung in mehreren Schritten aufgetragen und das Substrat zwischen diesen Schritten erwärmt, so dass das Lösungsmittel verdampft und sich die gegebenenfalls nanoporöse Struktur der Beschichtung bildet. Beim Sprüh-Coating wird ein feiner Nebel aus einem Lösungsmittel mit darin gelöstem Beschichtungsmaterial erzeugt und der sich auf der Substratoberfläche mit dem geätzten Mikrokanal und der Oberfläche der planaren Abdeckplatte niederschlägt. Nach dem Verdampfen des Lösungsmittels bleibt das zuvor in dem Lösungsmittel gelöste Beschichtungsmaterial auf der Oberfläche zurück. Vorzugsweise geschieht auch das Sprüh-Coating in mehreren Schritten, beispielsweise in vier Schritten, zwischen welchen das Substrat um 90° gedreht und erwärmt wird.

Anschließend wird das Substrat mit der planaren Abdeckplatte abgedeckt, so dass die jeweiligen niedrig-brechenden Beschichtungen der Substratoberfläche und der planaren Abdeckplatte aufeinander zu liegen kommen. Anschließend werden Substrat und Abdeckplatte durch Erwärmen von Substrat und Abdeckplatte miteinander verklebt. Dabei wird das Substrat und die Abdeckplatte, insbesondere bei Verwendung von Teflon als Beschichtungsmaterial, über die Glastemperatur jedoch nicht über die Zerstörungstemperatur des Beschichtungsmaterials erwärmt. Dadurch verbinden sich die beiden niedrig-brechenden Beschichtungen und es entsteht wiederum ein geschlossener Mikrokanal, der mit einer niedrig-brechenden Beschichtung vollständig ausgekleidet ist.

Weitere Ausführungsbeispiele und Vorteile der Erfindung werden nachfolgend beispielhaft anhand der begleitenden Figuren erläutert. Die Beispiele stellen bevorzugte Ausführungsformen dar, die die Erfindung in keiner Weise beschränken. Die gezeigten Figuren sind schematische Darstellungen, die die realen Proportionen nicht widerspiegeln, sondern einer verbesserten Anschaulichkeit der verschiedenen Ausführungsbeispiele dienen.

Im Einzelnen zeigen die Figuren:
- Figur 1: eine schematische Ansicht der Messvorrichtung;
- Figur 2: eine Draufsicht auf einen spiralförmigen Flüssigkeitslichtwellenleiter;
- Figur 3: einen Querschnitt durch ein erstes Ausführungsbeispiel eines beschichteten, geschlossenen Mikrokanals;
- Figur 4: einen Querschnitt durch ein zweites Ausführungsbeispiel eines beschichteten, geschlossenen Mikrokanals;
- Figur 5: einen Längsschnitt durch eine Messvorrichtung für Fluoreszenzmessung;
- Figur 6: eine Anordnung zur Ätzung eines Silizium-Substrats;
- Figur 7: ein erstes Ausführungsbeispiel eines Mikromischers; und
- Figur 8: ein zweites Ausführungsbeispiel eines Mikromischers.

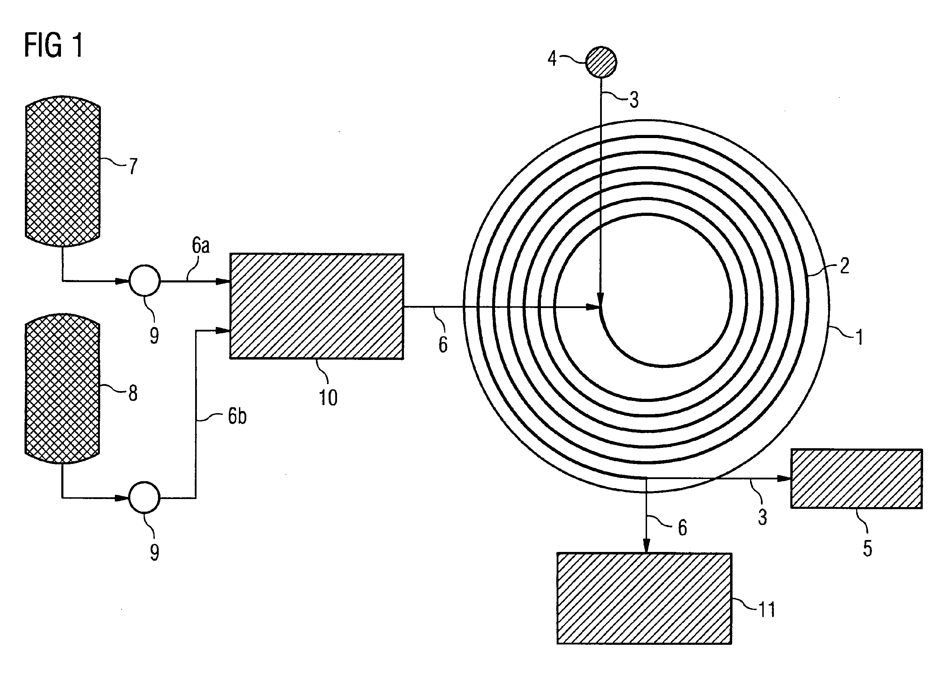

In Figur 1 ist ein Ausführungsbeispiel einer Messvorrichtung schematisch dargestellt. Dabei ist auf einem kreisscheibenförmigen Silizium-Wafer 1 ein spiralförmiger Mikrokanal 2 ausgebildet. Der Mikrokanal ist in dem Ausführungsbeispiel mit Teflon beschichtet und bildet bei Zuführen einer wässrigen Lösung einen Flüssigkeitslichtwellenleiter 2 aus. Alternativ kann der Mikrokanal mit einem nanoporösem Siliziumdioxid bzw. Magnesiumfluorid-Magnesiumoxidhydroxid beschichtet sein. Der Mikrokanal 2 ist mit einer in der Figur 1 nicht dargestellten Abdeckplatte abgedeckt, so dass sich ein hermetisch geschlossener Mikrokanal ergibt, der licht- und flüssigkeitsdicht ist. Die Messvorrichtung umfasst weiterhin eine monochromatische Lichtquelle 4, einen Lichtdetektor 5 und Lichtwellenleiter 3, die ein axiales Ein- und Auskoppeln von Licht in dem geschlossenen Mikrokanal gestatten. Dadurch kann zum einen das monochromatische sichtbare Licht der Lichtquelle 4 axial in den Flüssigkeitslichtwellenleiter eingekoppelt werden und zum anderen das transmittierte Licht axial aus dem Flüssigkeitslichtwellenleiter 2 ausgekoppelt werden und dem Lichtdetektor 5 zugeführt werden. Dies gestattet es, Absorptions- und Transmissionsmessungen in dem Flüssigkeitslichtwellenleiter 2 vorzunehmen. Als Lichtdetektor wird eine Avalanche-Diode verwendet. Alternativ können auch sonstige Arten von Photodioden oder anderweitige geeignete Lichtdetektoren verwendet werden. Insbesondere kann auch eine der Lichtdetektion vorgeschaltete spektrale Filterung (mittels Wellenlängenfilter oder mittels spektrometrischer Verfahren) vorgesehen sein. Sind die Anforderungen an die Miniaturisierung weniger hoch, können auch Lichtquellen und/oder Lichtdetektoren mit größeren Abmessungen verwendet werden, die mit dem Flüssigkeitslichtwellenleiter über beispielsweise selbsttragende Lichtwellenleiter 3 optisch in Verbindung stehen. Zwischen dem Flüssigkeitslichtwellenleiter 2 und den Lichtwellenleitern 3 sind nicht dargestellte Mikrolinsen, beispielsweise GRIN-Linsen (Gradient Index), vorgesehen, um mit kleiner Apertur die Ausbeute des ein- und ausgekoppelten Lichts zu erhöhen.

Dem Flüssigkeitslichtwellenleiter wird über Zuleitungen 6, 6a, 6b Flüssigkeit zugeführt und abgeführt. Dabei wird eine Probenflüssigkeit 7 und eine Nachweisflüssigkeit 8 jeweils über Mikropumpen 9 in die Zuleitung 6 gepumpt. Probenflüssigkeit 7 und Nachweisflüssigkeit 8 werden im Mikromischer 10 vor dem Zuleiten zu dem Flüssigkeitslichtwellenleiter 2 in einem vorbestimmten Mischungsverhältnis gemischt, wobei Mikromischer 10 und Mikropumpen 9 in Figur 1 getrennt von dem Silizium-Wafer 1 dargestellt sind. In einer alternativen Ausführungsform sind die Mikropumpen 9, der Mikromischer 10 und die entsprechenden Zuleitungen 6, 6a, 6b jedoch auf dem Silizium-Wafer 1 integriert, was zu einer erheblichen Miniaturisierung der gesamten Messvorrichtung führt. In der Messvorrichtung können die spektroskopischen Absorptions- und Transmissionsmessungen bei in dem Flüssigkeitslichtwellenleiter 2 ruhender oder fließender Flüssigkeit vorgenommen werden. Die abgeführte Flüssigkeit wird in einem Sammelbehälter 11 gesammelt und kann anschließend verworfen werden.

In der in Figur 1 dargestellten Messvorrichtung besteht die Möglichkeit zwei Flüssigkeiten vor der Zuleitung zu dem Flüssigkeitslichtwellenleiter in einem vorbestimmten Mischungsverhältnis zu mischen. Damit können beispielsweise Metallionen in der Probenflüssigkeit 7 nachgewiesen werden. Diese Metallionen haben häufig Absorptionsbänder im tiefen UV-Bereich, der Absorptions- und Transmissionsmessungen nicht leicht zugänglich ist. Eine Ausnahme davon bildet beispielsweise das Ni²⁺-Ion, das in wässriger Lösung eine Absorption bei 670 nm zeigt, die zum Nachweis solcher Ni²⁺-Ionen verwendet werden kann. Die Probenflüssigkeit 7 mit den in wässriger Lösung gelösten Metallionen wird mit der Nachweisflüssigkeit 8 gemischt, in der in ebenfalls wässriger Lösung ein geeigneter Komplexbildner gelöst ist. Der Komplexbildner geht mit dem Metallion eine Koordinationsverbindung ein, wobei der entstehende Komplex erlaubte Charge-Transfer-Übergänge besitzt, die einen hohen Extinktionskoeffizienten (ε > 1000) besitzen und im sichtbaren Spektralbereich liegen. Beispielsweise bilden Cu²⁺-Ionen mit dem Komplexbildner 1,10-Phenanthrolin (C₁₂H₈N₂) einen ionischen Komplex mit einem Kupferion und drei 1,10-Phenanthrolin-Molekülen ([Cu(C₁₂H₈N₂)₃]²⁺), der eine charakteristische Absorptionsbande bei 650 nm besitzt. Mit dem gleichen Komplexbildner können auch Fe²⁺-Ionen nachgewiesen werden, die mit 1,10-Phenanthrolin einen ionischen Komplex aus einem Fe-Ion und drei 1,10-Phenanthrolin-Molekülen bilden ([Fe(C₁₂H₈N₂)₃]²⁺), der eine charakteristische Absorptionsbande bei 510 nm besitzt. Fe²⁺-Ionen können auch mit dem Anion des 3-(2-Pyridyl)-5,6-bis(4-phenyl-sulfonsäure)-1,2,4-triazine-5',5"-Dinatriumsalzes [C₁₆H₈N₄O₈S₂]²⁻ einen Komplex bilden ([Fe(C₁₆H₈N₄O₈S₂)₃]⁴⁻), der eine charakteristische Absorption bei 567 nm besitzt.

Die Verwendung von Komplexen zum Nachweis von Metallionen, hat zum einen den Vorteil, dass die charakteristische Absorption des gebildeten Komplexes im sichtbaren Spektralbereich liegt. Dadurch können als Lichtquelle Leuchtdioden (LED) oder Halbleiterlaser verwendet werden, die als kostengünstige Bauteile mit kleinen Abmessungen verfügbar sind und monochromatisches Licht im sichtbaren Wellenlängenbereich abgeben können. Das monochromatische Licht ist typischerweise ausreichend schmalbandig, so dass das gesamte Licht ohne vorherige spektrale Filterung für die Absorptionsmessung verwendet werden und von einem Lichtdetektor ohne weitere spektrale Filterung detektiert werden kann. Dadurch können sowohl als Lichtquelle wie auch als Lichtdetektor Bauteile mit kleinen äußeren Abmessungen verwendet werden, die vorteilhaft direkt auf dem Silizium-Wafer oder einer darüberliegenden Abdeckplatte angeordnet werden können. Damit ist es in Summe möglich, eine Vielzahl der für die Zuleitung von Flüssigkeiten und Licht notwendigen Vorrichtungen auf dem Substrat zu integrieren und somit die Messvorrichtung wesentlich zu miniaturisieren.

Die Verwendung von Komplexbildern zum Nachweis von Metallionen hat den Vorteil, dass charakteristische Absorptionsbanden im sichtbaren Spektralbereich geschaffen werden. Vor allem ist deren Extinktion deutlich stärker als die Extinktion von den Metallionen selbst. Damit kann die Nachweisgrenze für Metallionen signifikant gesenkt werden. Auch durch die große Kanallänge des Mikrokanals 2 und den daraus resultierenden langen Lichtweg in dem Flüssigkeitslichtwellenleiter 2 kann die Nachweisgrenze deutlich gesenkt werden. Insgesamt sind somit Messungen im sub-ppb-Bereich möglich.

Das in Figur 1 dargestellte Ausführungsbeispiel gestattet einen miniaturisierten Aufbau einer Messvorrichtung, die dennoch große optische Weglängen bereitstellt und somit geringe Nachweisgrenzen ermöglicht. Durch die zusätzliche Verwendung von geeigneten Nachweisreaktionen wird die Nachweisgrenze weiter herabgesetzt.

In dem in Figur 1 dargestellten Ausführungsbeispiel wird als Substrat ein 4-Zoll-Silizium-Wafer verwendet, in dem ein Mikrokanal mit in einer Tiefe von 250 µm geätzt ist. Der Mikrokanal ist mit einer nicht dargestellten, lichtdurchlässigen, planaren Abdeckplatte aus Quarzglas abgedeckt. Der Mikrokanal ist mit einer 3 µm dicken Beschichtung aus Teflon beschichtet, so dass der geschlossene und beschichtete Mikrokanal 2 ein Flüssigkeitslichtwellenleiter 2 für wässrige Lösungen bildet.

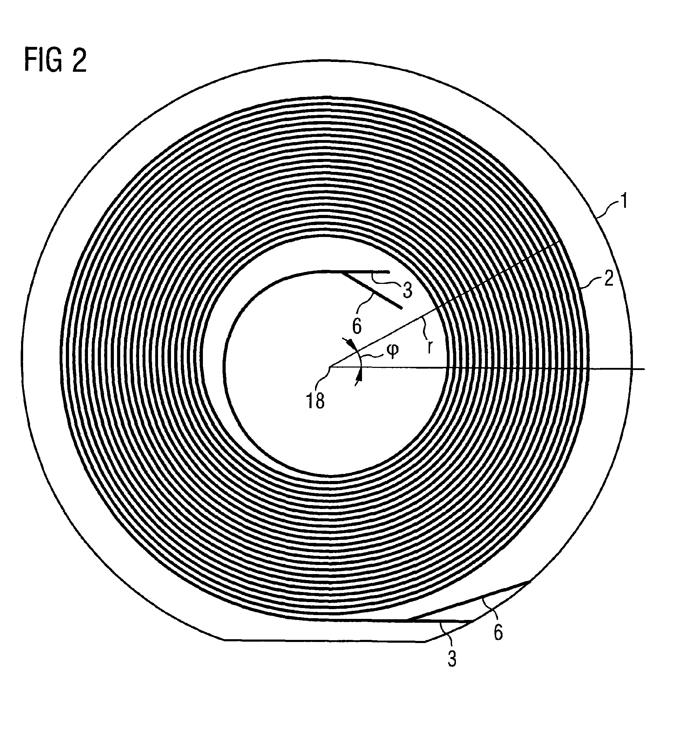

In Figur 2 ist der Silizium-Wafer 1 in größerem Detailgrad dargestellt. Der spiralförmige Mikrokanal 2 ist abgesehen von den Endbereichen als Archimedes-Spirale ausgebildet, dass heißt der Radius r des Mikrokanals 2 verändert sich ausgehend von dem Mittelpunkt 18 (Symmetriezentrum) der Spirale linear mit dem Azimuthalwinkel ϕ der Spirale. Die Spirale hat eine Ganghöhe von 600 µm. Die Ganghöhe ist die Änderung des Radius r des spiralförmigen Mikrokanals 2 nach Durchlaufen eines Azimuthalwinkels ϕ von 2π. Dadurch ist eine große Gesamtlänge des Mikrokanals und des entsprechenden Flüssigkeitslichtwellenleiters gewährleistet. Im gezeigten Ausführungsbeispiel beträgt die Länge des Flüssigkeitslichtwellenleiters ca. 4,7 Meter. Wie aus Figur 2 ersichtlich, wird der Mikrokanal 2 nicht bis zum Mittelpunkt 18 der Spirale fortgeführt, da bei zunehmendem Krümmungsradius eines solchen Flüssigkeitslichtwellenleiters verstärkt Lichtverluste auftreten, da der Auftreffwinkel von Licht auf die Grenzfläche zwischen dem Flüssigkeitskern des Flüssigkeitslichtwellenleiters und der niedrig-brechenden Beschichtung größer wird und somit die Bedingung der Totalreflexion von einem geringeren Anteil des Lichts eingehalten wird. Mit anderen Worten nimmt der Anteil der mit einem Lichtverlust behafteten Moden in dem Flüssigkeitslichtwellenleiter 2 zu. Daher wird in dem in Figur 2 dargestellten Ausführungsbeispiel auf der 4-Zoll-Silizium-Waferscheibe die Spirale des Mikrokanals 2 nur bis zu einem minimalen Spiralradius von 1 cm geführt. Danach wird das Licht aus dem Flüssigkeitslichtwellenleiter 2 ausgekoppelt. Lichtverluste aufgrund des Krümmungsradius des Flüssigkeitslichtwellenleiters können vermindert werden, indem die niedrig-brechende, totalreflektierende Beschichtung in dem Mikrokanal 2 auf ein hochreflektierendes Substrat 1 aufgetragen wird. Eine solche hochreflektierende Oberfläche kann bei Verwendung von Silizium als Substrat erhalten werden, da Silizium metallisch reflektierend ist. Weiterhin ist es hierbei von Vorteil, wenn der Mikrokanal eine glatte Oberfläche besitzt, wie dies beispielsweise beim Ätzen, insbesondere beim nasschemischen Ätzen eines solchen Siliziumsubstrats erreicht wird. Alternativ können die Lichtverluste bei kleinen Krümmungsradien auch reduziert werden wenn eine totalreflektierende Beschichtung mit besonders kleinem Brechungsindex verwendet wird. Dies kann durch die Verwendung von nanoporösem Siliziumdioxid bzw. Magnesiumfluorid-Magnesiumoxidhydroxid erreicht werden.

Wie in Figur 2 schematisch dargestellt, wird Licht beispielsweise über Wellenleiter 3 axial in den Flüssigkeitslichtwellenleiter ein- und ausgekoppelt. Weiterhin wird Flüssigkeit über Zuleitungen 6 zu dem Flüssigkeitslichtwellenleiter zugeführt und aus diesem abgeführt. Wie in Figur 2 ersichtlich, zeigen die Zuleitungen 6 einen Winkel von 30° gegenüber der Längsachse des Mikrokanals 2. Dadurch wird eine laminare Strömung innerhalb des Flüssigkeitslichtwellenleiters sichergestellt. Alternativ können in Abhängigkeit der gewählten hydraulischen Verhältnisse innerhalb des Flüssigkeitslichtwellenleiters auch andere Winkel zwischen Zuleitung und Längsachse des Flüssigkeitslichtwellenleiters gewählt werden.

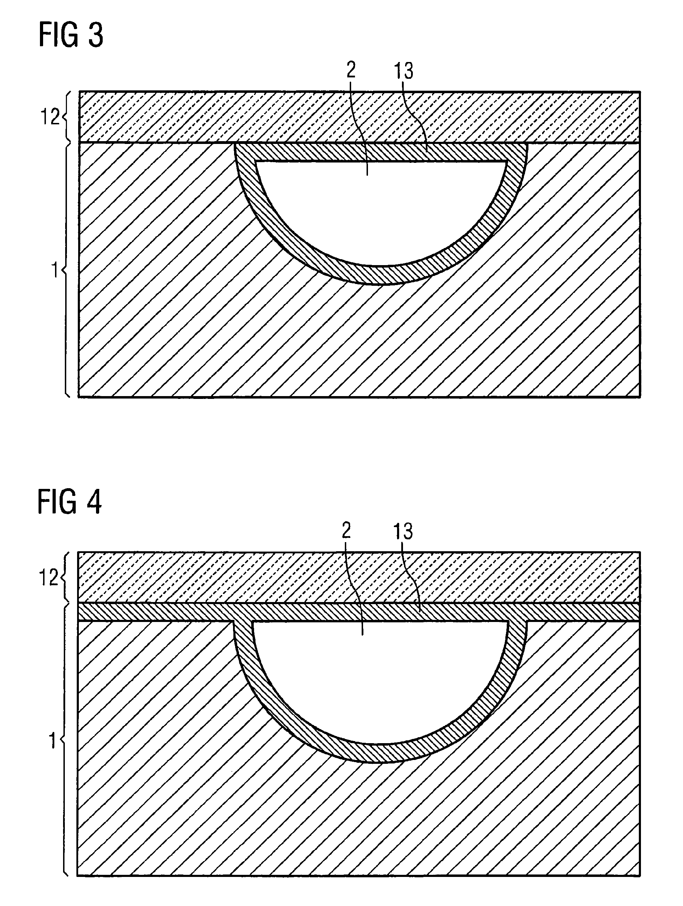

In den Figuren 3 und 4 ist ein Querschnitt durch den Mikrokanal 2 dargestellt. In beiden Figuren ist der Mikrokanal durch eine transparente Abdeckplatte 12 aus beispielsweise Quarzglas hermetisch geschlossen. Weiterhin ist der Mikrokanal 2 mit einer totalreflektierenden, niedrig-brechenden Schicht komplett ausgekleidet. Der in Figur 3 dargestellte geschlossene Mikrokanal wurde dadurch hergestellt, dass die Quarzglas-Abdeckplatte 12 auf dem Silizium-Substrat 1 durch anodisches Bonden befestigt wurde. Anschließend wurde Teflon in den geschlossenen Mikrokanal eingespritzt und mit gasförmigem Stickstoff gespült, so dass der geschlossene Mikrokanal 2 vollständig von einer totalreflektierenden Teflonschicht 13 mit einer Schichtdicke von 3 µm umschlossen ist. Durch das anodische Bonden wird ein geschlossener Mikrokanal geschaffen, der ausreichend flüssigkeits- und lichtdicht ist, um einen Flüssigkeitslichtwellenleiter auszubilden.

Der in Figur 4 dargestellte geschlossene und beschichtete Mikrokanal wurde mit einem dazu alternativen Herstellungsverfahren hergestellt. Dabei wurde zunächst die Quarzglas-Abdeckplatte 12 und das geätzte Silizium-Substrat 1 mit Teflon im Spin-Coating-Verfahren oder Sprüh-Coating-Verfahren beschichtet. Anschließend wurden das Substrat 1 und die Abdeckplatte 12 mit den beschichteten Seiten aufeinander gelegt und die gesamte Anordnung auf eine Temperatur von 330°C erwärmt. Dadurch verkleben sich die Teflonbeschichtungen von Substrat 1 und Abdeckplatte 12 neben dem geätzten Mikrokanal 2 und es entsteht in Summe ebenfalls ein geschlossener Mikrokanal 2, der von einer totalreflektierenden Schicht 13 vollständig umgeben ist und ausreichend flüssigkeits- und lichtdicht ist, um einen Flüssigkeitslichtwellenleiter auszubilden.

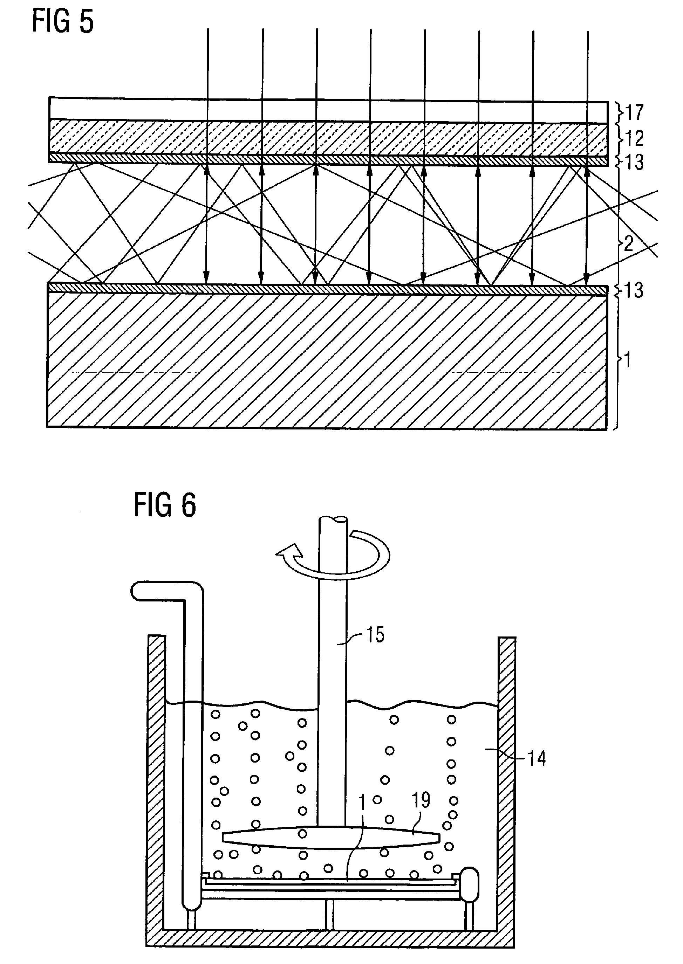

In Figur 5 ist ein einen Längsschnitt durch eine Messvorrichtung für Fluoreszenzmessungen dargestellt. Dabei wird Anregungslicht, beispielsweise UV-Licht, (in der Figur von oben kommend) durch eine Quarzglas-Abdeckplatte 12 transversal in den Flüssigkeitslichtwellenleiter 2 eingekoppelt. In der in dem Flüssigkeitslichtwellenleiter 2 enthaltenen Flüssigkeit wird Fluoreszenzlicht erzeugt, das an der niedrig-brechenden Schicht 13 total reflektiert und zu den Enden des Flüssigkeitslichtwellenleiters 2 geleitet wird. Die Abdeckplatte 12 ist mit einer im UV-Bereich anti-reflektierenden Beschichtung 17 versehen um Verluste durch Reflexion beim transversalen Einkoppeln des Anregungslichts zu minimieren. Zur Erhöhung der Ausbeute von Fluoreszenzlicht der nachzuweisenden Substanz kann im Vorfeld die Substanz mit Fluoreszenzfarbstoffen markiert und anschließend vermessen werden. Die dargestellte Messvorrichtung kann alternativ für Ramanmessungen verwendet werden, bei denen das Anregungslicht typischerweise im sichtbaren Spektralbereich liegt. Die anti-reflektierenden Beschichtung 17 wirkt dann im sichtbaren Spektralbereich anti-reflektierend.

In Figur 6 ist ein Ausführungsbeispiel eines apparativen Aufbaus für das Ätzen eines Silizium-Substrats 1 schematisch dargestellt. Dabei wird ein kreisscheibenförmige Silizium-Wafer 1 mit einem Durchmesser von vier Zoll einer Ätzlösung 14 ausgesetzt. Das Ätzen findet im sauren Milieu statt und die Ätzlösung enthält Säuren wie Flusssäure, Essigsäure, Salpetersäure und/oder Wasserstoffperoxid in geeigneten Anteilen, gegebenenfalls mit Tensid. In dieser flüssigen Ätzlösung 14 wird der zu ätzende Silizium-Wafer 1 mit der Prozessseite nach oben in einem geeigneten Ätzbehälter befestigt. Die unten liegende Rückseite des Silizium-Wafers 1 ist passiviert. Die dargestellte Anordnung der Prozessseite des Silizium-Wafers 1 nach oben hat den Vorteil, dass bei der Ätzung gegebenenfalls entstehende Gase leicht entweichen können. Zwei Zentimeter oberhalb des kreisscheibenförmigen Silizium-Wafers 1 wird ein rotationssymmetrisches Rührwerk 15 mit einem konischen Rührfisch oder einer diskusförmigen Rührscheibe 19 mittig positioniert und rotiert. Dadurch wird ein laminarer Strömungsfluss innerhalb der Ätzlösung realisiert, was in einer gleichmäßigen, homogenen Strömungsgeschwindigkeit des Ätzmediums an der Wafer-Oberfläche resultiert. Durch eine solche laminare, homogene Strömung wird die Ätzgeschwindigkeit optimiert, da verbrauchte Ätzlösung an jeder Stelle der Wafer-Oberfläche kontinuierlich abgeführt wird. Die Ätztemperatur sollte sich dabei im diffusioskontrollierten Bereich befinden. Entsprechend sind die Ätzgeschwindigkeiten in vertikaler Richtung, das heißt senkrecht zur Wafer-Oberfläche, und horizontaler Richtung, das heißt entlang der Wafer-Oberfläche, im Wesentlichen gleich, wodurch in guter Näherung eine isotrope Ätzung und ein Mikrokanal 2 mit entsprechend halbkreisförmigem Querschnitt erzielt wird. Ein solcher halbkreisförmiger Querschnitt ist in den Figuren 3 und 4 schematisch dargestellt, Weiterhin gewährleistet die laminare, gleichmäßige Strömung an der Prozessoberfläche des Silizium-Wafers einen runden und glatten Ätzgraben und somit einen Mikrokanal 2 mit glatter Oberfläche und geringer Oberflächenrauhigkeit.

Zur zusätzlichen Glättung der Oberfläche des Mikrokanals, kann bei Bedarf der Mikrokanal mit einem Gasgemisch aus Flusssäure und Ozon bearbeitet werden. Dabei wird das Gas über ein Düsenarray gleichmäßig über den gesamten Wafer verteilt. Dieser resultierende Polierabtrag beträgt 1- 2 µm.

In dem dargestellten Ausführungsbeispiel geschieht das Ätzen des Mikrokanals 2 in mehreren Schritten. Beispielsweise dauert jeder Ätzschritt 4 Minuten. Anschließend wird der Silizium-Wafer 1 aus der Ätzlösung 14 entfernt und mit Wasser gespült. Anschließend wird der Silizium-Wafer wieder in die Ätzlösung 14 eingesetzt, mittels des Rührwerks 15 wieder eine laminare Strömung der Ätzlösung 14 erzeugt und ein weiterer Ätzschritt mit vorbestimmter Dauer und frischer, neu angesetzter Ätzlösung beispielsweise erneut 4 Minuten durchgeführt. Durch eine solche sequentielle Ätzung in mehreren Ätzschritten, die durch Spülen des Silizium-Wafers unterbrochen sind, wird die Haltbarkeit der Ätzmaske, die in dem Ausführungsbeispiel aus Nitrid besteht, verbessert. Somit wird ein unkontrolliertes Aufweiten weitgehend vermieden und es wird ein Mikrokanal mit hoher Güte erhalten.

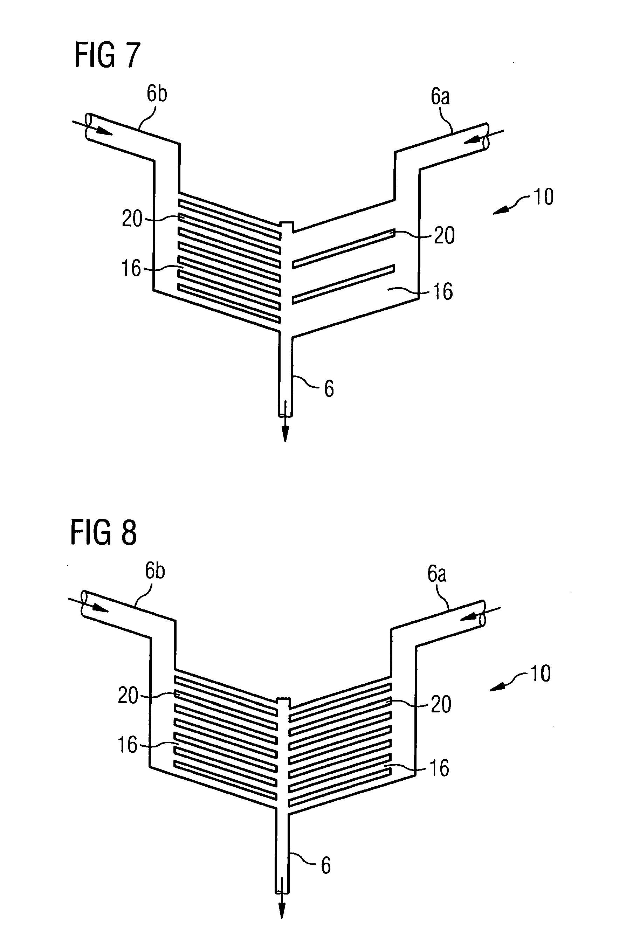

In Figur 7 ist ein Mikromischer dargestellt, der auf dem Silizium-Wafer 1 integriert ist. Der Mikromischer 10 gestattet es zwei Flüssigkeiten, die jeweils über die Zuleitungen 6a und 6b zu fließen, effektiv zu mischen und diese über Zuleitungen 6 dem Flüssigkeitslichtwellenleiter 2 zuzuführen. Die Zuleitungen 6a und 6b können je nach geplanter Anwendung dimensioniert, sind in Figur 7 jedoch mit identischem Durchmesser dargestellt. Da im Allgemeinen in Mikrokanälen keine Turbulenzen vorliegen, würde es bei einfachem Zusammenführen der Zuleitungen 6a und 6b zu einer gemeinsamen Zuleitung 6 zu keiner strömungsbedingten Vermischung der beiden Flüssigkeiten (Probenflüssigkeit 7 und Nachweisflüssigkeit 8) kommen.

In dem in Figur 7 dargestellten Mikromischer bilden die Enden der Zuleitungen 6a und 6b die Eingangskanäle des Mikromischers 10 und der Anfang der Zuleitung 6 den Ausgangskanal des Mikromischers 10. In Figur 7 sind die Eingangskanäle und der Ausgangskanal parallel angeordnet. Sie können alternativ jedoch auch unter einem Winkel zueinander angeordnet sein. Die beiden Eingangskanäle und der Ausgangskanal sind jeweils über eine Vielzahl von parallelen Flusskanälen 16 verbunden, die nicht-rechtwinklig zu den Eingangskanälen und dem Ausgangskanal angeordnet sind. Benachbarte Flusskanäle 16 sind jeweils durch Lamellen 20 voneinander getrennt. Die Flusskanäle haben eine Länge zwischen 100 und 1000 µm und eine Breite zwischen 20 und 500 µm.

Der Mikromischer besitzt nicht notwendigerweise einen symmetrischen Aufbau. Er kann vielmehr auf die geplante Anwendung optimiert werden und dazu auf beiden Seiten, das heißt in dem Teil der der Zuleitung der Probenflüssigkeit 7 dient und in dem Teil der der Zuleitung der Nachweisflüssigkeit 8 dient, verschieden aufgebaut sein. Insbesondere können auf beiden Seiten verschiedene Längen und/oder verschiedene Breiten der parallelen Flusskanäle vorgesehen sein.

In dem in Figur 7 dargestellten Ausführungsbeispiel sind die Längen der Flusskanäle auf beiden Seiten identisch und betragen jeweils 1000 µm. Auf der in Figur 7 links dargestellten Seite, die der Zuleitung der Nachweisflüssigkeit 8 über die Zuleitung 6b dient, haben die Flusskanäle eine Breite von 50 µm. Auf der in Figur 7 rechts dargestellten Seite, die der Zuleitung der Probenflüssigkeit 7 über die Zuleitung 6a dient, haben die Flusskanäle 16 eine Breite von 500 µm. Bei gleicher Breite der die Flusskanäle 16 trennenden Lamellen 20 von 100 µm, weist in dem dargestellten Ausführungsbeispiel die rechte Seite (Probenflüssigkeit 7) des Mikromischers 10 in dem Bereich zwischen dem Eingangskanal und dem zentralen Ausgangskanal eine geringere Anzahl von Flusskanälen 16, eine entsprechend geringere Anzahl von Lamellen 20 und somit einen insgesamt höheren Durchflussquerschnitt als die entsprechende linke Seite (Nachweisflüssigkeit 8) des Mikromischers auf.

Somit begünstigt der in Figur 7 dargestellte Mikromischer 10 ein Mischungsverhältnis des resultierenden Flüssigkeitsgemisches mit einem größeren Anteil von Probenflüssigkeit 7 und einem kleineren Anteil von Nachweisflüssigkeit 8. Das Mischungsverhältnis wird weiterhin durch die in den Zuleitungen 6a und 6b vorgesehenen Pumpen beeinflusst.

In dem in Figur 8 dargestellten zweiten Ausführungsbeispiel des Mikromischers 10 sind beide Seiten des Mikromischers gleich aufgebaut. Die Länge der Flusskanäle 16 beträgt hier 200 µm und die Breite der Flusskanäle 16 beträgt 50 µm. Die Breite der Lamellen beträgt 20 µm und die Länge der Lamellen ist gleich der Länge der Flusskanäle. Weiterhin sind die Flusskanäle 16 auf der linken und rechten Seite des Mikromischers 10 zueinander versetzt angeordnet, so dass die Enden der Flusskanäle 16 jeweils der Stirnseite einer Lamelle gegenüberliegen. Durch diesen Aufbau des Mikromischers 10 werden im Ausgangskanal kleindimensionierte Schichtstapel der beiden zu vermischenden Flüssigkeiten erzeugt, die sich über Diffusion schnell vermischen. Dieser Effekt tritt auch bei dem in Figur 7 dargestellten ersten Ausführungsbeispiel des Mikromischers 10 auf.

Die in den Figuren 7 und 8 dargestellten Mikromischer gewährleisten somit eine effektive Durchmischung von zwei verschiedenen Flüssigkeiten ohne Turbulenzen zu verwenden.

## Patentansprüche

1. Vorrichtung zur Ausbildung eines Flüssigkeitslichtwellenleiters umfassend einen Silizium-Wafer als Substrat (1) mit einem Mikrokanal (2), der mit einer, im Vergleich zu einer wässrigen Lösung, niedrig-brechenden Beschichtung (13) versehen ist und mit einer Abdeckplatte (12) zur Ausbildung eines geschlossenen Mikrokanals (2) abgedeckt ist, wobei die Abdeckplatte (12) zumindest oberhalb des Mikrokanals (2) mit einer weiteren niedrig-brechenden Beschichtung (13) versehen ist, so dass der geschlossene Mikrokanal (2) vollständig mit der niedrig-brechenden Beschichtung (13) ausgekleidet ist, wobei in dem Substrat (1) zumindest eine Zuleitung (6) ausgebildet ist, die ein Zuführen von Flüssigkeit in den geschlossenen Mikrokanal (2) und/oder ein Abführen von Flüssigkeit aus dem geschlossenen Mikrokanal (2) gestattet, wobei vorzugsweise an den Enden des Mikrokanals (2) jeweils eine Zuleitung (6) ausgebildet ist, und wobei zumindest an einem Ende des geschlossenen Mikrokanals (2), vorzugsweise an beiden Enden des Mikrokanals (2) eine Vorrichtung zum axialen Einkoppeln von Licht in den geschlossenen Mikrokanal (2) und/oder zum axialen Auskoppeln von Licht aus dem geschlossenen Mikrokanal (2) vorgesehen ist, **dadurch gekennzeichnet, dass** es sich bei dem Mikrokanal (2) um einen isotrop geätzten, spiralförmigen Mikrokanal (2) handelt.

2. Vorrichtung nach Anspruch 1, **dadurch gekennzeichnet, dass** die Vorrichtung zum axialen Ein- und/oder Auskoppeln von Licht als Aufnahme für einen Lichtwellenleiter (6) ausgebildet ist, die ein Ein- und/oder Auskoppeln über den Lichtwellenleiter (6) gestattet, wobei die Aufnahme vorzugsweise als axiale, geradlinige Fortführung des Mikrokanals (2) in dem Substrat (1) ausgebildet ist.

3. Vorrichtung nach einem der Ansprüche 1 bis 2, **dadurch gekennzeichnet, dass** die Abdeckplatte (12) lichtdurchlässig ist, vorzugsweise aus Quarzglas besteht und besonders bevorzugt mit einer im UV und VIS-Spektralbereich anti-reflektierenden Beschichtung (17) versehen ist.

4. Vorrichtung nach einem der Ansprüche 1 bis 3, **dadurch gekennzeichnet, dass** in der zumindest einen Zuleitung (6) ein Mikromischer (10) und/oder eine Mikropumpe (9) ausgebildet ist.

5. Messvorrichtung umfassend:
- eine Vorrichtung zur Ausbildung eines Flüssigkeitslichtwellenleiters nach Anspruch 1, sowie
- eine Lichtquelle (4), die eingerichtet ist, den geschlossenen Mikrokanal (2) mit Licht zu durchstrahlen,
- einen Lichtdetektor (5), und
- eine erste Flüssigkeitspumpe (9), die dem geschlossenen Mikrokanal (2) über die zumindest eine Zuleitung (6, 6a) eine Probenflüssigkeit (7) zuführt.

6. Messvorrichtung nach Anspruch 5, **dadurch gekennzeichnet, dass** die Messvorrichtung eingerichtet ist, einen kontinuierlichen Flüssigkeitsstrom in dem Mikrokanal (2) vorzusehen.

7. Messvorrichtung nach Anspruch 5 oder 6, **dadurch gekennzeichnet, dass** die Vorrichtung zur Ausbildung eines Flüssigkeitslichtwellenleiters zum axialen Ein- und/oder Auskoppeln von Licht als Aufnahme für einen Lichtwellenleiter (6) ausgebildet ist, die ein Ein- und/oder Auskoppeln über den Lichtwellenleiter (6) gestattet, wobei die Aufnahme vorzugsweise als axiale, geradlinige Fortführung des Mikrokanals (2) in dem Substrat (1) ausgebildet ist.

8. Messvorrichtung nach einem der Ansprüche 5 bis 7, **dadurch gekennzeichnet, dass** die Abdeckplatte (12) lichtdurchlässig ist, vorzugsweise aus Quarzglas besteht und besonders bevorzugt mit einer im UV- und VIS-Spektralbereich anti-reflektierenden Beschichtung (17) versehen ist.

9. Messvorrichtung nach einem der Ansprüche 5 bis 8, **dadurch gekennzeichnet, dass** in der zumindest einen Zuleitung (6) ein Mikromischer (10) und/oder eine Mikropumpe (9) ausgebildet ist.

10. Messvorrichtung nach Anspruch 9, weiterhin umfassend:
- eine zweite Flüssigkeitspumpe (9), die dem geschlossenen Mikrokanal (2) über einen Mikromischer (10) eine Nachweisflüssigkeit (8) zuführt.

11. Messvorrichtung nach einem der Ansprüche 5 bis 10, weiterhin umfassend:
- einen ersten Lichtwellenleiter (3), der eingerichtet ist, an einem ersten Ende des geschlossenen Mikrokanals (2) Licht der Lichtquelle (4) in den geschlossenen Mikrokanal (2) axial einzukoppeln, wobei die Lichtquelle (4) vorzugsweise eingerichtet ist monochromatisches, sichtbares Licht abzustrahlen und/oder
- einen zweiten Lichtwellenleiter (3), der eingerichtet ist, an einem zweiten Ende des geschlossenen Mikrokanals (2) Licht aus dem geschlossenen Mikrokanal (2) axial auszukoppeln und dem Lichtdetektor (11) zuzuleiten.

12. Messverfahren für eine Messvorrichtung nach einem der Ansprüche 5 bis 11, umfassend die Schritte:
- Zuführen von Probenflüssigkeit (7) und vorzugsweise Nachweisflüssigkeit (8) in den geschlossenen Mikrokanal (2),
- transversales Durchstrahlen des geschlossenen Mikrokanals (2) mit Licht der Lichtquelle (4), welche vorzugsweise als Anregungslichtquelle ausgebildet ist,
- axiales Auskoppeln von Licht aus dem geschlossenen Mikrokanal (2),
- Detektion des ausgekoppelten Lichts in dem Lichtdetektor (11).

13. Messverfahren für eine Messvorrichtung nach einem der Ansprüche 5 bis 11, umfassend die Schritte:
- Zuführen von Probenflüssigkeit (7) und vorzugsweise Nachweisflüssigkeit (8) in den geschlossenen Mikrokanal (2),
- axiales Einkoppeln von Licht der Lichtquelle (4) in den geschlossenen Mikrokanal (2) an einem Ende des geschlossenen Mikrokanals (2),
- axiales Auskoppeln von transmittiertem Licht aus dem geschlossenen Mikrokanal (2) an einem anderen Ende des geschlossenen Mikrokanals (2),
- Detektion des transmittierten Lichts in dem Lichtdetektor (11).

14. Messverfahren nach einem der Ansprüche 12 oder 13, **dadurch gekennzeichnet, dass** ein kontinuierlicher Flüssigkeitsstrom in dem Mikrokanal (2) vorgesehen wird.

## Claims

1. An apparatus for forming a liquid optical waveguide comprising a silicon wafer as a substrate (1) having a microchannel (2) which is provided with a coating (13) that is low-refractive in comparison with an aqueous solution, and which is covered with a cover plate (12) for forming a closed microchannel (2), wherein the cover plate (12) is provided with a further low-refractive coating (13) at least above the microchannel (2), so that the closed microchannel (2) is completely lined with the low-refractive coating (13), there being formed in the substrate (1) at least one feed line (6) which permits a supplying of liquid into the closed microchannel (2) and/or a removing of liquid from the closed microchannel (2), thereby preferably being formed a respective feed line (6) at the ends of the microchannel (2), and there being provided at least at one end of the closed microchannel (2), preferably at both ends of the microchannel (2), an apparatus for coupling light axially into the closed microchannel (2) and/or for coupling light axially out of the closed microchannel (2), **characterized in that** the microchannel (2) is an isotropically etched, spiral-shaped microchannel (2).

2. The apparatus according to claim 1, **characterized in that** the apparatus for axially coupling light in and/or out is configured as a receiving means for an optical waveguide (6) which permits a coupling in and/or coupling out via the optical waveguide (6), the receiving means preferably being configured as an axial, straight continuation of the microchannel (2) within the substrate (1).

3. The apparatus according to either of claims 1 and 2, **characterized in that** the cover plate (12) is light-transmissive, preferably consists of quartz glass and is particularly preferably provided with a coating (17) that is anti-reflective in the UV and VIS spectral ranges.

4. The apparatus according to any of claims 1 to 3, **characterized in that** a micromixer (10) and/or a micropump (9) is formed in the at least one feed line (6).

5. A measuring apparatus comprising:
- an apparatus for forming a liquid optical waveguide according to claim 1, as well as
- a light source (4) which is adapted to penetrate the closed microchannel (2) with light,
- a light detector (5), and
- a first liquid pump (9) which supplies a sample liquid (7) to the closed microchannel (2) via the at least one feed line (6, 6a).

6. The measuring apparatus according to claim 5, **characterized in that** the measuring apparatus is adapted to provide a continuous liquid stream within the microchannel (2).

7. The measuring apparatus according to claim 5 or 6, **characterized in that** the apparatus for forming a liquid optical waveguide for axially coupling light in and/or out is configured as a receiving means for an optical waveguide (6) which permits a coupling in and/or coupling out via the optical waveguide (6), the receiving means preferably being configured as an axial, straight continuation of the microchannel (2) within the substrate (1).

8. The measuring apparatus according to any of claims 5 to 7, **characterized in that** the cover plate (12) is light-transmissive, preferably consists of quartz glass and is particularly preferably provided with a coating (17) that is anti-reflective in the UV and VIS spectral ranges.

9. The measuring apparatus according to any of claims 5 to 8, **characterized in that** a micromixer (10) and/or a micropump (9) is formed in the at least one feed line (6).

10. The measuring apparatus according to claim 9, further comprising:
- a second liquid pump (9) which supplies a detection liquid (8) to the closed microchannel (2) via a micromixer (10).

11. The measuring apparatus according to any of claims 5 to 10, further comprising:
- a first optical waveguide (3) which is adapted to couple light of the light source (4) axially into the closed microchannel (2) at a first end of the closed microchannel (2), the light source (4) preferably being adapted to emit monochromatic, visible light, and/or
- a second optical waveguide (3) which is adapted to couple light axially out of the closed microchannel (2) at a second end of the closed microchannel (2) and to feed it to the light detector (11).

12. A measuring method for a measuring apparatus according to any of claims 5 to 11, comprising the steps of:
- supplying sample liquid (7) and preferably detection liquid (8) into the closed microchannel (2),
- transversally penetrating the closed microchannel (2) with light of the light source (4), which is preferably configured as an excitation light source,
- axially coupling light out of the closed microchannel (2),
- detecting the coupled-out light in the light detector (11).

13. A measuring method for a measuring apparatus according to any of claims 5 to 11, comprising the steps of:
- supplying sample liquid (7) and preferably detection liquid (8) into the closed microchannel (2),
- coupling light of the light source (4) axially into the closed microchannel (2) at one end of the closed microchannel (2),
- coupling transmitted light axially out of the closed microchannel (2) at another end of the closed microchannel (2),
- detecting the transmitted light in the light detector (11).

14. The measuring method according to either of claims 12 and 13, **characterized in that** a continuous liquid stream is provided within the microchannel (2).

## Revendications

1. Dispositif de réalisation d'un guide de lumière liquide comprenant un wafer de silicium en tant que substrat (1) comportant un microcanal (2) qui est pourvu d'un revêtement (13) faiblement réfringent en comparaison avec une solution aqueuse et est recouvert d'une plaque de recouvrement (12) pour la réalisation d'un microcanal (2) fermé, la plaque de recouvrement (12) étant pourvue, au moins au-dessus du microcanal (2), d'un revêtement (13) faiblement réfringent supplémentaire, de telle sorte que le microcanal (2) fermé est entièrement revêtu du revêtement (13) faiblement réfringent, au moins un conduit d'amenée (6) étant réalisé dans le substrat (1) et permettant une amenée de liquide dans le microcanal (2) fermé et/ou une évacuation de liquide hors du microcanal (2) fermé, il étant de préférence réalisé respectivement aux extrémités du microcanal (2) un conduit d'amenée (6), et il étant prévu au moins à une extrémité du microcanal (2) fermé, de préférence aux deux extrémités du microcanal (2), un dispositif d'injection axiale de lumière dans le microcanal (2) fermé et/ou d'éjection axiale de lumière hors du microcanal (2) fermé, **caractérisé en ce que** le microcanal (2) consiste en un microcanal (2) en spirale gravé de façon isotrope.

2. Dispositif selon la revendication 1, **caractérisé en ce que** le dispositif d'injection axiale et/ou d'éjection axiale de lumière est réalisé sous forme de réceptacle destiné à un guide de lumière (6), lequel réceptacle permet une injection et/ou éjection par l'intermédiaire du guide de lumière (6), le réceptacle étant de préférence réalisé sous forme de prolongation rectiligne axiale du microcanal (2) dans le substrat (1).

3. Dispositif selon une des revendications de 1 à 2, **caractérisé en ce que** la plaque de recouvrement (12) est translucide, se compose de préférence de verre de quartz et est particulièrement de préférence pourvue d'un revêtement (17) anti-réfléchissant dans la plage spectrale UV et VIS.

4. Dispositif selon une des revendications de 1 à 3, **caractérisé en ce que**, dans le au moins un conduit d'amenée (6), un micromélangeur (10) et/ou une micropompe (9) est réalisé(e).

5. Dispositif de mesure, comprenant:
- un dispositif de réalisation d'un guide de lumière liquide selon la revendication 1, ainsi que
- une source lumineuse (4) qui est équipée pour engendrer un passage de lumière à travers le microcanal (2) fermé,
- un détecteur de lumière (5), et
- une première pompe à liquide (9) qui amène au microcanal (2) fermé, par l'intermédiaire du au moins un conduit d'amenée (6, 6a), un liquide échantillon (7).

6. Dispositif de mesure selon la revendication 5, **caractérisé en ce que** le dispositif de mesure est équipé pour prévoir un flux de liquide continu dans le microcanal (2).

7. Dispositif de mesure selon la revendication 5 ou 6, **caractérisé en ce que** le dispositif de réalisation d'un guide de lumière liquide destiné à l'injection axiale et/ou à l'éjection axiale de lumière est réalisé sous forme de réceptacle destiné à un guide de lumière (6), lequel réceptacle permet une injection et/ou éjection par l'intermédiaire du guide de lumière (6), le réceptacle étant de préférence réalisé sous forme de prolongation rectiligne axiale du microcanal (2) dans le substrat (1).

8. Dispositif de mesure selon une des revendications de 5 à 7, **caractérisé en ce que** la plaque de recouvrement (12) est translucide, se compose de préférence de verre de quartz et est particulièrement de préférence pourvue d'un revêtement (17) anti-réfléchissant dans la plage spectrale UV et VIS.

9. Dispositif de mesure selon une des revendications de 5 à 8, **caractérisé en ce que**, dans le au moins conduit d'amenée (6), un micromélangeur (10) et/ou une micropompe (9) est réalisé(e).

10. Dispositif de mesure selon la revendication 9, comprenant en outre:
- une deuxième pompe à liquide (9) qui amène au microcanal (2) fermé, par l'intermédiaire d'un micromélangeur (10), un liquide témoin (8).

11. Dispositif de mesure selon une des revendications de 5 à 10, comprenant en outre:
- un premier guide de lumière (3) qui est équipé pour, à une première extrémité du microcanal (2) fermé, injecter axialement de la lumière de la source lumineuse (4) dans le microcanal (2) fermé, la source lumineuse (4) étant de préférence équipée pour émettre de la lumière visible monochromatique et/ou
- un deuxième guide de lumière (3) qui est équipé pour, à une deuxième extrémité du microcanal (2) fermé, éjecter axialement de la lumière hors du microcanal (2) fermé et en acheminer au détecteur de lumière (11).

12. Procédé de mesure destiné à un dispositif de mesure selon une des revendications de 5 à 11, comprenant les étapes:
- amenée de liquide échantillon (7) et de préférence de liquide témoin (8) dans le microcanal (2) fermé,
- engendrement d'un passage transversal, à travers le microcanal (2) fermé, de lumière de la source lumineuse (4) qui est réalisée de préférence sous forme de source de lumière d'excitation,
- éjection axiale de lumière hors du microcanal (2) fermé,
- détection de la lumière éjectée dans le détecteur de lumière (11).

13. Procédé de mesure selon une des revendications de 5 à 11, comprenant les étapes:
- amenée de liquide échantillon (7) et de préférence de liquide témoin (8) dans le microcanal (2) fermé,
- injection axiale de lumière de la source de lumière (4) dans le microcanal (2) fermé à une extrémité du microcanal (2) fermé,
- éjection axiale de lumière transmise hors du microcanal (2) fermé à une autre extrémité du microcanal (2) fermé,
- détection de la lumière transmise dans le détecteur de lumière (11).

14. Procédé de mesure selon une des revendications 12 ou 13, **caractérisé en ce qu'**un flux de liquide continu est prévu dans le microcanal (2).
